# EUROPEAN PATENT SPECIFICATION

(11) **EP 3 415 261 B1**
(45) Date of publication and mention of the grant of the patent: **29.07.2020**
(21) Application number: 18177867.1
(22) Date of filing: 14.06.2018
(51) Int. Cl.: B23K 11/093, B23K 11/24, B23K 11/30, B23K 11/04, B23K 11/14, B23K 101/14

(54) **METHOD FOR PRODUCING TUBULAR RADIATORS BY WELDING AND CORRESPONDING WELDING APPARATUS**
HERSTELLUNGSVERFAHREN FÜR RÖHRENHEIZKÖRPER DURCH SCHWEISSEN UND DAZUGEHÖRIGES SCHWEISSGERÄT
MÉTHODE POUR PRODUIRE DES RADIATEURS TUBULAIRES PAR SOUDAGE ET APPAREIL DE SOUDAGE CORRESPONDANT

(30) Priority: 14.06.2017 IT 201700065871
(43) Date of publication of application: 19.12.2018
(73) Proprietor: IRSAP SPA, 45031 Arqua' Polesine (RO) (IT)
(72) Inventor: ZEN, Alessandro, 45100 ROVIGO (IT)
(74) Representative: Bergadano, Mirko

(56) References cited:
- EP-A1- 0 677 354
- EP-A2- 2 353 767

## Description

The present invention relates to a method for producing tubular radiators by welding and to a corresponding welding apparatus, as shown in the preamble of claims 1 and 7 (see, for example, EP2353767 B1).

In particular, the present invention finds advantageous, but not exclusive, application in the welding of radiators consisting of a plurality of modules, each of which comprises two head pieces and at least two tubular elements welded between the two head pieces, to which the following description will make explicit reference without thereby detracting from its generality.

Each module of a modular tubular radiator comprises a plurality of tubular elements and two head pieces, each of which comprises a plurality of sleeves in a number equal to the plurality of tubular elements, and each tubular element has its ends connected by welding between a sleeve of a first head piece and a corresponding sleeve of the other head piece.

It is known to weld the tubular elements of a tubular radiator module to the relative two head pieces by resistance welding, and in particular by projection welding. Normally, the tubular elements are welded to the two head pieces in two different moments, albeit close together, and in any case simultaneously for each head piece.

The projection welding process involves juxtaposing, up to bring into contact, the tubular elements with the relative sleeves of a head piece, making pulsating electric current circulate simultaneously in all the tubular elements, and therefore in the corresponding sleeves, for a pre-defined period of time, axially pressing the tubular elements against the sleeves while the currents circulate. The current circulation through the contact points between the tubular elements and the sleeves generates a great heat, due to the contact resistance, which causes the metal to melt and thus the welding of the tubular elements to the sleeves. In this document direct current is understood to refer to a current that does not change polarity, i.e. that is not alternating. The welding process involves a final forging phase, during which the circulation of the currents is stopped to allow the weld to cool, but the axial mechanical pressure of the tubular elements against the sleeves is maintained.

The direct current is pulsating at the mains frequency (50 Hz) or at a medium frequency, i.e. a value typically between 1 and 5 kHz. To allow the metal to melt, the current has high values, up to 50 kA, and is generated by applying a low voltage pulsated continuous electric voltage between each tubular element and the corresponding sleeve of a head piece.

An apparatus known of for welding the tubular radiator modules by means of the aforementioned welding process comprises support means for supporting and holding in the final position envisaged the sleeves of at least one head piece and a relative plurality of tubular elements, at least one pair of electrodes for each welding point, i.e. a first electrode in contact with a relative tubular element and a second electrode in contact with a relative sleeve, and a plurality of pulsated direct current generators, each of which has its own output connected to a respective pair of electrodes.

The current generators are powered by single-phase or three-phase voltage of the electric mains. The technology of each pulsated current generator depends on the frequency of the pulsated current. In the case of mains frequency, the current generator comprises a so-called welding transformer, i.e. a step-down transformer having a primary winding powered by the electrical network and a secondary winding with a central tap coupled to a pair of rectifier diodes to supply the electrodes with a low voltage direct current, pulsating at the mains frequency. In the case of medium frequency, instead, the current generator comprises a rectifier-inverter unit powered by the electric mains to provide an alternating tension with intermediate voltage, for example between 500 and 600 V, and pulsating at the medium frequency, and a welding transformer with the primary winding powered by the rectifier-inverter assembly to provide the electrodes with a low-voltage direct current, pulsating at the medium frequency.

Having a current generator for each welding point makes it possible to control the welds independently and therefore makes it possible to check the quality of execution. Moreover, the dimensions of an individual current generator, which are substantially defined by the size of the transformer, are relatively small compared to those of a single current generator able to supply current for all the welding points. However, in the case in which it is desirable to produce modules comprising a large number of tubular elements, for example six tubular elements, the apparatus must comprise an equal number of current generators and is therefore rather complex and expensive.

The purpose of the present invention is to provide a method for welding tubular radiator modules and a corresponding welding apparatus, which has a more economical architecture of the known apparatus, regardless of the technology used by the current generator.

According to the present invention, a method is provided for producing tubular radiators and a welding apparatus as defined in the appended claims.

The present invention will now be described with reference to the appended drawings, which illustrate a nonlimiting embodiment, wherein:
- Figure 1 shows, in a perspective view, a schematic representation of the welding apparatus of the present invention in a phase of producing two modules of a tubular radiator according to the method of the present invention;
- Figure 2 illustrates a part of the apparatus in figure 1, which supports and holds in position elements of the tubular radiator modules;
- Figure 3 illustrates the part of the apparatus in figure 2 during a step of the method according to the invention;
- Figure 4 illustrates a block diagram of a current generator of the apparatus in figure 1;
- Figure 5 shows, in a perspective view, a further embodiment of the welding apparatus according to the present invention;
- Figure 6 shows, in a lateral view, a part of the apparatus in figure 5 which supports and holds in position elements of the tubular radiator modules;
- Figure 7 shows, in a perspective view, a further embodiment of the welding apparatus according to the present invention;
- Figure 8 shows a detail of the embodiment in figure 7;
- Figure 9 shows, in a lateral view, a further embodiment of a part of the welding apparatus, derived from the embodiment in figure 5;
- Figure 10 shows, according to a perspective view, a further embodiment of a part of the welding apparatus, derived from the embodiment in figure 7;
- Figure 11 shows a block diagram of the current generator of the welding apparatus according to a further embodiment of the present invention; and
- Figure 12 shows, according to a perspective view, a further embodiment of the welding apparatus according to the present invention.

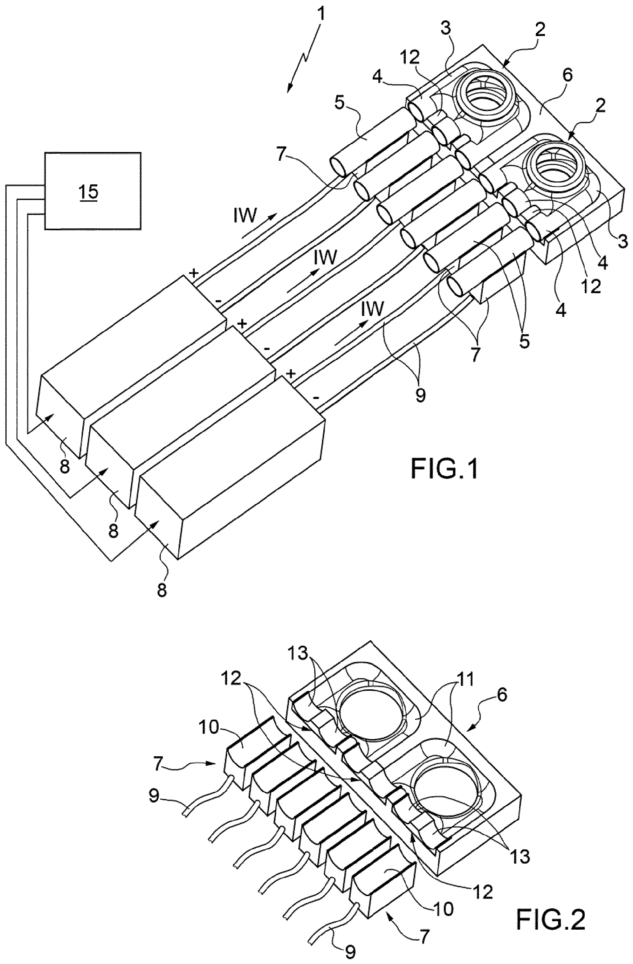

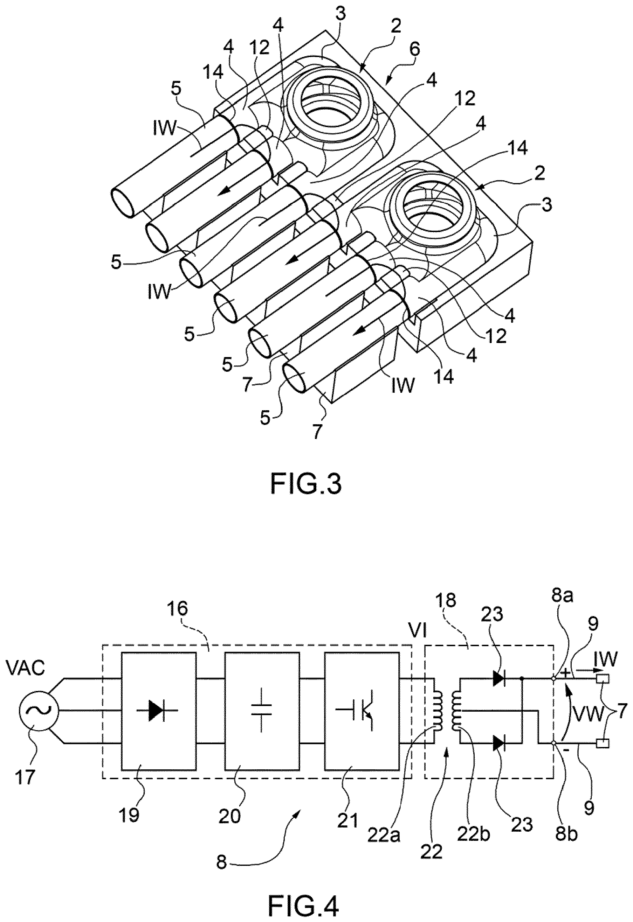

In Figure 1, reference numeral 1 globally denotes the welding apparatus made according to the dictates of the present invention. The apparatus 1 is designed to produce at least one module 2 of a known metal tubular radiator by means of a projection welding process. The module 2 comprises two head pieces, only one of which is shown in figure 1, indicated by reference numeral 3 and comprises a plurality of sleeves 4, and comprises a plurality of tubular elements 5, each connected between a sleeve 4 of a first one of the head pieces 3 and a corresponding sleeve 4 of the other head piece 3. The apparatus 1 in figure 1 is configured to simultaneously produce two modules 2 comprising three tubular elements 5. The tubular elements 5 are first welded to a relative head piece 3, for example that shown in figure 3, and then to the other head piece 3.

With reference to figure 1, the apparatus 1 comprises a support block 6 for supporting and holding in the final position envisaged the head pieces 3 and a plurality of electrodes 7 which act as electrical contacts for respective tubular elements 5 but also as support elements to support and hold the respective tubular elements in the final position 5. In the final position envisaged, i.e. at the end of the welding, each module 2 lies horizontally.

The tubular elements 5 are shown in figure 1 in a step preceding the welding of the modules 2, i.e. when the head pieces 3 and the tubular elements 5 are arranged on the support block 6 and on the electrodes 7 with the tubular elements 5 still distant from the relative head pieces 3. The apparatus 1 comprises movable clamping means (not shown) divided into two groups; a first group for vertically pressing the head pieces 3 against the support block 6 and, a second group for vertically pressing the tubular elements 5 against the electrodes 7 and horizontal moving means (not shown) for moving the electrodes 7 and the relative clamping means towards the support block 6 and the relative group of clamping means, or vice versa, so as to bring the tubular elements 5 coaxially into contact with the corresponding sleeves 4.

Again with reference to figure 1, the apparatus 1 comprises a plurality of current generators 8, each of which can be supplied by an alternating current voltage source (not shown) and which has its own output electrically connected to a respective pair of electrodes 7 adjacent to each other, by means of a respective pair of electric cables 9, and suitable to supply a high amperage pulsating IW continuous current with a low voltage pulsating direct voltage VW.

With reference to figure 2, which shows a part of the apparatus 1 in the absence of the head pieces 3 and of the tubular elements 5, each electrode 7 has an upper portion 10 of a concave shape, and in particular has a transverse curvature complementary to that of a portion of the lateral surface of the tubular element 5 to hold the tubular element 5 transversely in position and for a better distribution of the electrical contact around the tubular element 5. The electrodes 7 are made of metal, preferably copper.

The support block 6 comprises an upper portion 11 shaped as a cast of the faces of two head pieces 3 arranged side by side to keep the two head pieces 3 which will be of two distinct modules 2 in the final position envisaged.

The support block 6 comprises a plurality of contact bridges 12 embedded underneath in the upper portion 11 and made of an electrical conductive material, preferably metal, and in particular copper. Each contact bridge 12 places two sleeves 4 adjacent to each other in electrical contact. Each contact bridge 12 comprises two upper portions 13 of concave shape, each having a transverse curvature complementary to that of a portion of the side surface of the sleeve 4 to hold the sleeve 4 transversely in position and for a better distribution of the electrical contact around the sleeves.

It is to be noted that in the embodiment illustrated in the figures, the contact bridges 12 are three in number and the central one contacts two sleeves 4 relative to two separate head pieces 3.

With reference to figure 3, in which the tubular elements 5 are shown in contact with respective sleeves 4 at the same number of contact lines 14 and the electric cables 9 have not been removed for better clarity, during the welding process the current IW generated by each current generator 8 and supplied by the relative pair of electrodes 7 circulates from one tubular element 5 to the other of the pair of tubular elements 5 in contact with said pair of electrodes 7, passing through the two corresponding sleeves 4. The closing of the path of each current IW through the two sleeves 4 is guaranteed by the respective contact bridge 12, which creates a preferred path for the current, despite these two sleeves 4 being part of a head piece 3 which comprises a third sleeve 4. On account of the contact resistance present along each contact line 14, the circulation of the current IW generates a great heat which melts the metal along two contact lines 14 arranged in series and thus realizes a pair of welds in series, indicated below by the same number 14, which join a pair of tubular elements 5 to a pair of sleeves 4.

It is to be noted that the pair of sleeves 4 placed in contact by the contact bridge 12 in a central position comprises a sleeve 4 of a first module 2 and a sleeve of the other module 2 and is welded to a pair of tubular elements 5 comprising a tubular element 5 of the first module 2 and a tubular element of the second module 2.

Referring again to figure 1, the apparatus 1 further comprises an electronic control unit 15 configured to control the current generators 8 so that they generate the respective currents IW simultaneously, for a predetermined welding time TW, which depends on the thickness of the tubular elements 5 and of the sleeves 4. The control unit 15 is configured to control the current generators 8 so as to regulate the intensity of the currents IW generated.

During the welding time TW, the horizontal movement means press the tubular elements 5 against the sleeves 4 so as to perform a welding stroke of a size comprised between 1 and 2 mm.

According to an embodiment of the invention shown in figure 4, the current generator 8 is a medium frequency generator, i.e. it comprises a rectifier-inverter unit 16 which can be powered by the alternating voltage VAC supplied by a three-phase electrical network 17 to provide an alternating voltage VI with intermediate voltage oscillating at a medium frequency FI, and a welding transformer 18 powered by the rectifier-inverter assembly 16 to supply the electrodes 7 with the direct current IW and the voltage VW, both pulsating at the medium frequency FI. Thus, the output of the current generator 8, which is connected to a pair of electrodes 7, coincides with the output of the welding transformer 18.

The medium frequency FI has a value generally comprised between 1 and 50 kHz. Typically, the most common current technologies make it possible to obtain an alternating voltage VI oscillating at a medium frequency FI of values ranging from 1 to 5 kHz. If future technologies allow it, it is however clear that it is desirable to obtain higher medium frequency values FI to increase the efficiency of the current generator 8 and to decrease the dimensions of the welding transformer 18.

In particular, the rectifier-inverter assembly 16 is substantially of the known type and comprises a rectifier stage 19, a damper stage 20, for example of a capacitive type, and an inverter stage 21, for example comprising IGBT devices. The welding transformer 18 is of the known type and comprises a step-down transformer 22, which has a primary winding 22a connected to the output of the inverter stage 21 to be powered by the voltage VI and a secondary winding 22b having a central tap, and two rectifier diodes 23 coupled to the secondary winding 22b so that the welding transformer 18 functions as a double half-wave rectifier. Thus, the output of the current generator 8 comprises a positive terminal 8a connected to the cathodes of the rectifier diodes 23 and a negative terminal 8b connected to the central tap of the secondary winding 22b.

The rectifier-inverter assembly 16 and the welding transformer 18 are sized to provide a current IW having an amplitude generally comprised between 5 and 50 kA and a voltage having an amplitude generally comprised between 5 and 20 V. The current IW and voltage VW values are selected according to the particular type of radiator to be welded. With the current technology of IGBT devices, the voltage VI has an amplitude between 500 and 600 V: however, higher values are not excluded if new technologies make such possible.

The control unit 15 controls the current generators 8 independently of each other to control the execution of each pair of welds 14 in series, separately from the execution of every other pair of welds 14 in series. In particular, the control unit 15 controls the rectifier-inverter groups 16 of the current generators 8, and more in detail controls the inverter stages 21 of the rectifier-inverter groups 16.

The execution of each pair of welds 14 is controlled by controlling a plurality of parameters, such as for example an initial value and a welding value of the current IW, a rise time TS of the current IW from the initial value to the welding value, the welding time TW already mentioned previously and a forging time.

According to an additional embodiment of the present invention, not shown, each voltage source 8 is a mains frequency generator, namely is devoid of the rectifier-inverter group 16 so that the primary winding 22a of the transformer 22 is powered directly by the VAC voltage and comprises a solid state switch, which consists for example, of a pair of SCR devices connected in antiparallel, is connected in series with the primary winding 22a and is controlled by the control unit 15 to control the dispensing of current IW, and consequently the welding transformer 18 is sized for the direct transformation of the VAC voltage, oscillating at the mains frequency (50 Hz), into the VW voltage and to provide the direct current IW, both current IW and voltage VW being pulsated at the mains frequency. The embodiment with current generators 8 at mains frequency is substantially less expensive than that at medium frequency, but requires larger transformers 22 and produces less clean and thin welds.

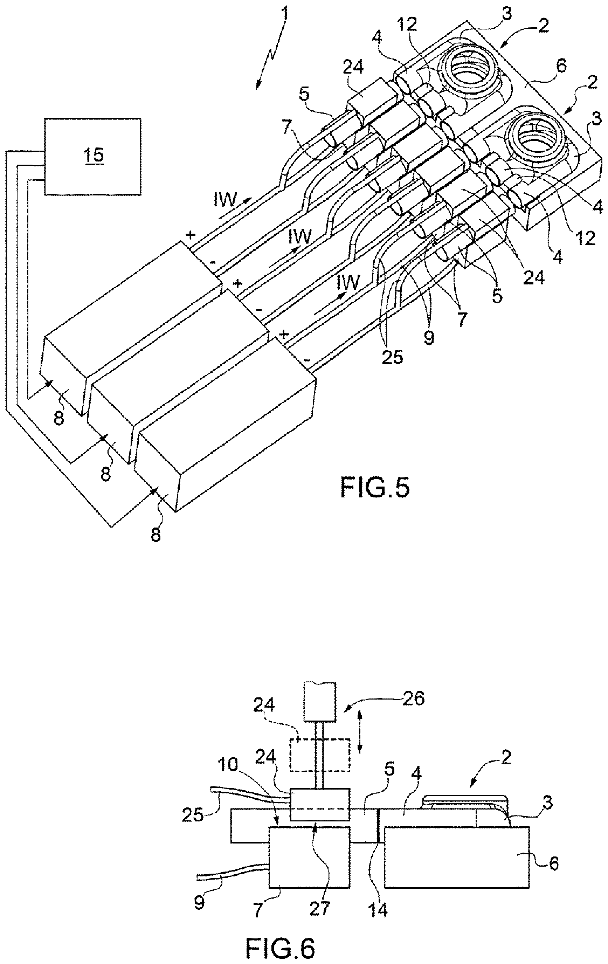

According to a further embodiment of the present invention shown in figures 5 and 6, in which the corresponding elements are indicated by the same numbers and letters as in figure 1, the apparatus 1 comprises, for each pair of electrodes 7 connected to a current generator 8, a respective pair of upper electrodes 24, which is electrically connected to the output of the same current generator 8, and thus in parallel to the pair of electrodes 7, by means of a pair of electric cables 25, and is movable to come into contact with the relative pair of tubular elements 5 pressing them vertically against the pair of electrodes 7. The upper electrodes 24 form part of the aforesaid second group of movable clamping means in that they block the tubular elements 5 against the respective electrodes 7. Advantageously, the upper electrodes 24 are made of the same material as the electrodes 7.

With reference to figure 6, in which the tubular elements 5 are shown in contact with the sleeves 4 at the contact lines 14, the apparatus 1 comprises moving means 26 for moving the upper electrodes 24 towards and away from the tubular elements 5 before and, respectively, after the execution of the welds 14. Figure 6 shows the movement of the upper electrodes 24 between a locking position, shown with a continuous line, in which the electrodes 24 press the relative tubular elements 5 against the respective electrodes 7, and a release position, shown with a dashed line, in which the electrodes 24 are distant from the relative tubular elements 5 to allow the positioning of the latter before welding and the removal of the module 2 after welding.

Each upper electrode 24 comprises a lower portion 27 of a concave shape similar to that of the upper portion 10 of the respective electrode 7 for a better distribution of the electrical contact around the tubular element 5. The shape of the upper portion 10 of the electrode 7 and the shape of the lower portion 27 of the respective electrode 24 makes it possible to distribute the electrical contact along a portion of cylindrical surface of the relative tubular element 5 close to the contact line 14 (figure 6). This, in use, promotes the distribution of the current IW along the entire contact line 14 and therefore a more uniform weld.

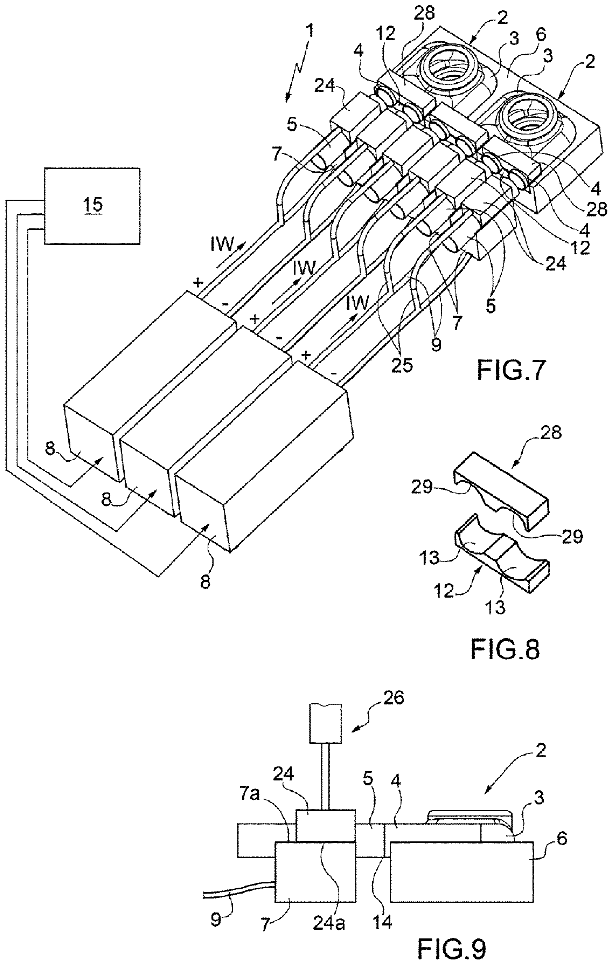

According to a further embodiment of the present invention shown in figure 7, in which the corresponding elements are indicated with the same numbers and letter as in figure 5, the apparatus 1 comprises, for each contact bridge 12, a respective upper contact bridge 28, which is movable to press the relative pair of sleeves 4 against the first bridge and is suitable to place the two sleeves 4 in electrical contact. The upper contact bridges 28 form part of the aforesaid first group of movable clamping means in that they block the relative pair of sleeves 4 against the respective contact bridges 12. Advantageously, the upper contact bridges 28 are made of the same material as the contact bridges 12.

The movement means 26, although not shown in figure 7, are also suitable to move the upper contact bridges 28, towards and away from the relative sleeves 4 before and, respectively, after the execution of the welds 14. The distancing of the upper contact bridges 28 from the relative sleeves 4 allows the positioning of the latter before welding and the removal of the module 2 after welding.

With reference to figure 8, each upper contact bridge 28 comprises two lower portions 29 of a concave shape and similar to that of the upper portions 13 of the respective contact bridge 12 for a better distribution of the electrical contact around the sleeves 4.

According to a further embodiment illustrated in figure 9, in which the corresponding elements are indicated with the same numbers and letters as in figure 6, each electrode 7 and the respective upper electrode 24 are shaped so as to reciprocally come into contact with each other, at the two side edges 7a of the electrode 7 (one of the edges 7a is visible in figure 9), and at two respective side edges 24a of the electrode 24 (one of the edges 24a is visible in figure 9), when both electrodes 7 and 24 are in contact with the relative tubular element 5, and the upper electrode 24 is free of the electric cable 25 in figure 6. The reciprocal contact between the electrode 7 and the electrode 24 causes, in use, the current IW to be distributed along the entire contact line 14 without the need to connect the electrode 24 to the current generator 8, which also powers the electrode 7, thus allowing a more uniform welding.

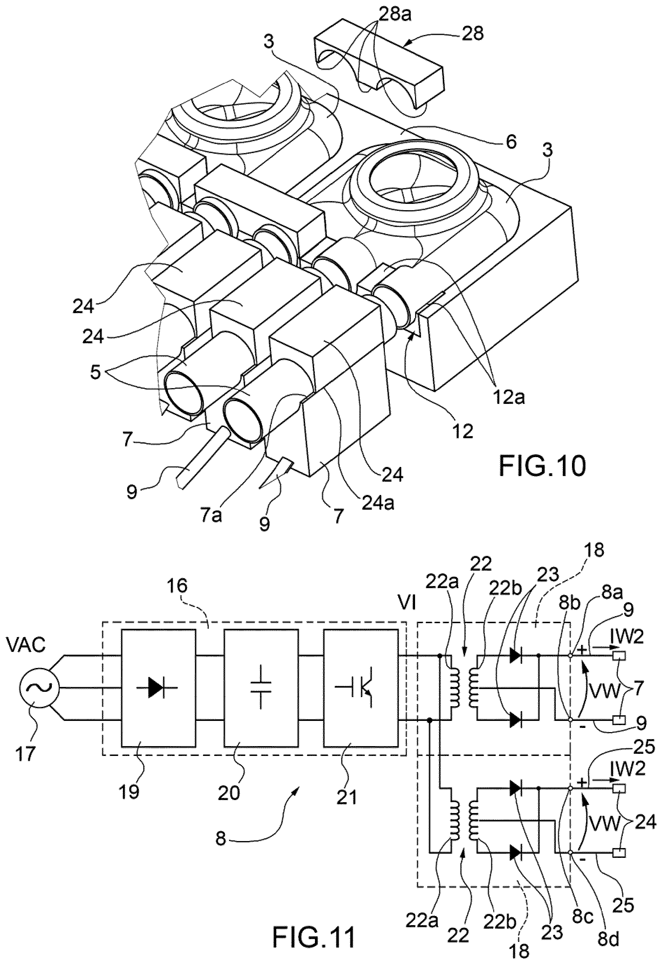

According to a further embodiment shown in figure 10, in which the corresponding elements are indicated with the same numbers and letters as in figure 9 and only one upper contact bridge 28 is shown raised for greater clarity, also each contact bridge 12 and the respective upper contact bridge 28 are shaped so as to reciprocally come into contact at three surfaces 12a (only two of which are visible in figure 10) of the contact bridge 12 and of three respective surfaces 28a of the contact bridge 28, when both the contact bridges 12 and 28 are in contact with the relative pair of sleeves 4. This embodiment improves the distribution of the current IW and thus improves the welding uniformity along the contact line 14.

According to a further embodiment of the present invention shown in figure 11, in which the corresponding elements are indicated by the same numbers and letters as in figures 4, 5 and 7, each current generator 8 differs from that illustrated in figure 4 in that it comprises two welding transformers 18 both powered by the rectifier-inverter group 16, i.e. having the respective primary windings 22a connected in parallel to the output of the inverter 21, to provide two respective continuous currents IW2 with the same voltage VW at the two outputs of the current generator 8 itself and in that the second output is connected to a respective pair of upper electrodes 24.

A first output of the current generator 8 is defined by the positive and negative terminals 8a and 8b and is analogous to that of the embodiment in figure 4. The second output coincides with the output of the second welding transformer 18, and in particular comprises a positive terminal 8c connected to the cathodes of the rectifying diodes 23 of the second voltage transformer 18 and a negative terminal 8d connected to the central tap of the secondary winding 22b of the second voltage transformer 18. The rectifier-inverter group 16 and the two welding transformers 18 are configured to provide two IW2 currents having an amplitude equal to half the amplitude of the current IW.

The output 8c-8d is connected to the respective pair of upper electrodes 24 by means of the electric cables 25. In other words, the upper electrodes 24 are no longer connected directly to the respective electrodes 7, as in the embodiments shown in figures 5 and 7, but each pair of upper electrodes 24 is connected to the second output 8c-8d of the respective current generator 8. Thus, when each pair of upper electrodes 24 presses the relative tubular elements 5 against the respective pair of electrodes 7, the two welding transformers 18 are parallel to each other and the two currents IW2 are added together, giving rise to the current IW required to perform the two welds 14 in series.

Advantageously, each current generator 8 according to the embodiment in figure 11 is physically divided into two parts, a first part comprising the rectifier-inverter group 16 and a first welding transformer 18 and the second part comprising the second welding transformer 18 and being integral with the upper electrodes 24, and therefore movable with respect to the said first part. The second welding transformer 18 has its own primary winding 22a connected to the output of the rectifier-inverter group 16 by means of a respective pair of cables.

The embodiment corresponding to figure 11 makes it possible to reduce the length of the electric cables 25 connected to the upper electrodes 24. In fact, being movable, the upper electrodes 24 would require electric cables 25 of a certain length, which would produce high power losses due to the high currents involved. Moreover, this embodiment allows a more precise control of the current distribution along each contact line 14 so as to improve the uniformity of the corresponding weld.

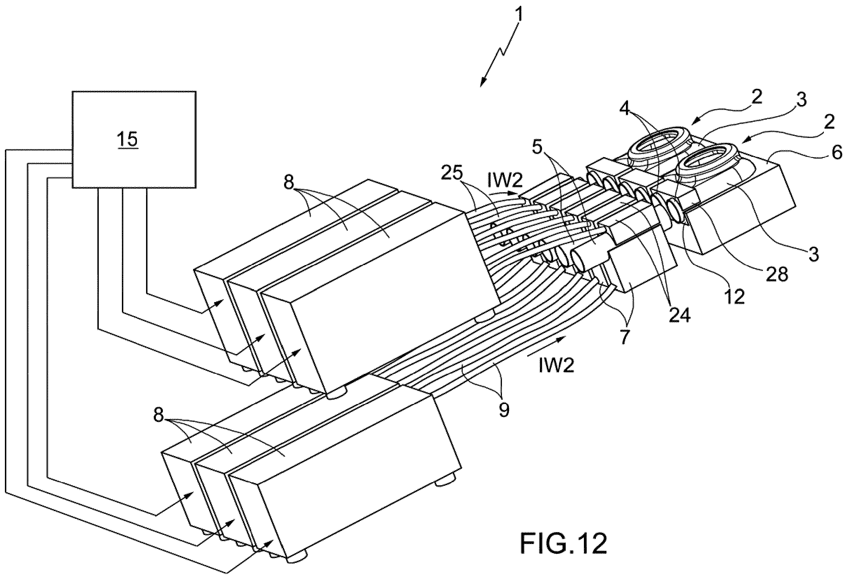

According to a further embodiment of the present invention shown in figure 12, in which the corresponding elements are indicated with the same numbers and letters as in figure 7, the current generators 8 are of the type illustrated in figure 4, twice the number as in the embodiments described with reference to figures 1, 5 and 7 and are divided into two groups, each current generator 8 of a first group having its own output connected to a respective pair of electrodes 7, by means of the pair of electric cables 9, and each current generator 8 of the second group having its output electrically connected to the pair of upper electrodes 24 associated with the pair of electrodes 7, by means of the pair of electric cables 25. In other words, for each pair of series welds 14 to be performed, the apparatus 1 comprises a pair of current generators 8, a first connected with the output to the pair of electrodes 7 and a second connected with the output to the pair of upper electrodes 24.

Each current generator 8 is suitable to supply the direct current IW2 with the low voltage VW voltage. As for the embodiment described with reference to figure 4, the welding transformers 18 of each pair of current generators 8 used to perform a certain pair of welds in series 14 are in parallel with each other and the two currents IW2 are added giving rise to the IW current required to perform the two welds in series 14.

The embodiment in figure 11 makes it possible to improve the accuracy of control of the current distribution along each contact line 14 so as to improve the uniformity of the corresponding weld.

Although the invention described above makes particular reference to an exemplary embodiment, it is not to be considered limited to this embodiment, all the variants, modifications or simplifications covered by the appended claims falling within such scope, such as for example:
- the upper portion 11 of the support block 6 is shaped in such a way as to hold in the final position one or more head pieces 3 adjacent to each other for a module 2 having a number of tubular elements 5 different from three, for example a module 2 having six tubular elements 5, or a module 2 having four tubular elements 5 together with a module 2 having two tubular elements 5, or three modules 2 having two tubular elements 5 each; and
- a number of electrodes 7 and of possible upper electrodes 24 greater than six and a support block 6 dimensioned accordingly.

## Claims

1. A method for producing a tubular radiator having at least one module (2) comprising two head pieces (3), each comprising a plurality of sleeves (4), and a plurality of tubular elements (5), each connected between a sleeve (4) of a first one of said head pieces (3) and a corresponding sleeve (4) of the other head piece (3), the method comprising the steps of:
- placing and holding at least one of the two head pieces (3) and the relative plurality of tubular elements (5) in the desired final position; and
- joining the sleeves (4) of said at least one head piece (3) to the relative tubular elements (5) by resistance welding;
and **being characterized in that** the step of joining the sleeves (4) of said at least one head piece (3) to the relative tubular elements (5) by resistance welding comprises the step of:
- joining pairs of sleeves (4) to the same number of pairs of tubular elements (5) by means of respective pairs of welds (14) in series with one another, each pair of series welds (14) being obtained by generating a single electric current (IW) and by causing it to circulate from a tubular element (5) to the other of the relative pair of tubular elements (5) through the two relative sleeves (4).

2. The method according to claim 1, wherein said pairs of series welds (14) are carried out simultaneously.

3. The method according to claim 1 or 2, wherein said resistance welding is a projection welding.

4. The method according to any of the claims from 1 to 3, wherein said resistance welding is a medium-frequency pulsed direct current welding.

5. The method according to any of the claims from 1 to 4, wherein the execution of each pair of series welds (14) is controlled separately from the execution of any other pair of series welds (14).

6. The method according to any of the claims from 1 to 5, wherein each one of the two head pieces (3) of said at least one module (2) comprises an odd number of sleeves (4) and said plurality of tubular elements (5) comprises the same odd number of tubular elements (5); the step of placing and holding at least one head piece (3) and the relative plurality of tubular elements (5) in the desired position comprising:
- placing beside one another two head pieces (3) of at least two modules (2) and the two relative pluralities of tubular elements (5) in the desired final positions relative to the two head pieces (3);
said pairs of tubular elements (5) comprising a pair consisting of a tubular element (5) of a first module (2) and a tubular element (5) of the other module (2) and said pairs of sleeves (4) comprising a pair consisting of a sleeve (4) of the head piece (3) of the first module (2) and a sleeve (4) of the head piece (3) of the other module (2).

7. A resistance welding apparatus to implement the method according to any of the claims from 1 to 6, comprising: support means (6, 7) to support and hold at least one pair of sleeves (4) of at least one head piece (3) and a respective pair of tubular elements (5) in the desired final position; the apparatus **being characterized in that** it further comprises: at least one first contact bridge (12), which is designed to establish an electrical contact between the sleeves of said pair of sleeves (4); at least one pair of first electrodes (7), which are designed to come into contact with said pair of tubular elements (5) and preferably each comprise a concave portion (10) having a curvature that is complementary to that of a side surface portion of a tubular element (5) for a better distribution of the electrical contact; and current generator means (8), which are designed to generate said electric current (IW) and are electrically connected to the pair of first electrodes (7) so as to obtain said pair of series welds (14).

8. The apparatus according to claim 7, wherein said first contact bridge (12) is integral with said support means (6, 7) and preferably comprises two concave portions (13), each having a curvature that is complementary to that of a side surface portion of the sleeves (4) for a better distribution of the electrical contact.

9. The apparatus according to claim 7 or 8, wherein said pair of first electrodes (7) is integral with said support means (6, 7) and is preferably part of said support means (6, 7) so as to hold said pair of tubular elements (5) in the desired final position.

10. The apparatus according to any of the claims from 7 to 9, comprising, for each pair of first electrodes (7), a respective pair of second electrodes (24), which is electrically connected to said current generator means (8), is movable and is designed to come into contact with said pair of tubular elements (5), thus pressing them against the pair of first electrodes (7), preferably each one of the second electrodes (24) comprising a concave portion (27) having a curvature that is complementary to that of a side surface portion of the tubular elements (5) for a better distribution of the electrical contact.

11. The apparatus according to any of the claims from 7 to 10, wherein said current generator means (8) comprise, for each pair of first electrodes (7), a respective rectifier-inverter assembly (16), which can be powered by an AC network voltage source (17) so as to provide an alternating voltage (VI) oscillating at a medium frequency (FI), and a respective transformer assembly (18), which is powered by the rectifier-inverter assembly (16) and has an output (8a-8b) connected to the pair of first electrodes (7) so as to provide said electric current (IW), which is a pulsed direct current and pulses at the medium frequency (FI), with a pulsed direct voltage (VW) having a smaller voltage than said alternating voltage (VI).

12. The apparatus according to claim 10 and 11, wherein said output (8a-8b) of said transformer assembly (18) is connected in parallel to the pair of first electrodes (7) and to the respective pair of second electrodes (24).

13. The apparatus according to claims 10 and 11, wherein said transformer assembly comprises a first and a second welding transformers (18), which are both powered by said rectifier-inverter assembly (16), the first welding transformer (18) having an output (8a-8b) which is connected to the pair of first electrodes (7), and the second welding transformer (18) having an output (8c-8d) which is connected to the pair second of electrodes (24).

14. The apparatus according to claim 10, wherein each first electrode (7) and the respective second electrode (24) are shaped so as to mutually come into contact when both the first and the second electrode (24) are in contact with the relative tubular element (5).

15. The apparatus according to claim 10 and comprising first moving means (26) to move said pair of second electrodes (24) to and from said pair of tubular elements (5) before and after the execution of said pair of series welds (14), respectively.

16. The apparatus according to any of the claims from 7 to 15 and comprising, for each first contact bridge (12), a respective second contact bridge (28), which is movable so as to press said pair of sleeves (4) against the first contact bridge (12), is designed to establish an electrical contact between the sleeves (4) of said pair of sleeves (4) and preferably comprises two concave portions (29), each having a curvature that is complementary to that of a side portion of the sleeves (4) for a better distribution of the electrical contact.

17. The apparatus according to claim 16, wherein said first and second contact bridges (12, 28) are shaped so as to mutually come into contact when both the first and the second bridge (12, 28) are in contact with the relative said pair of sleeves (4).

18. The apparatus according to any of the claims from 7 to 17, wherein said current generator means (8) comprise a plurality of rectifier-inverter assemblies (16), each associated with a respective pair of first electrodes (7), and a plurality of transformer assemblies (18), each powered by a respective rectifier-inverter assembly (16) and having an output (8a-8b) which is connected to the pair of first electrodes (7); the apparatus (1) comprising control means (15), which are designed to control said rectifier-inverter assemblies (16) independently of one another so as to separately control the execution of each pair of series welds (14) .

## Patentansprüche

1. Verfahren zum Herstellen eines Röhrenheizkörpers mit mindestens einem Modul (2), das zwei Kopfstücke (3), die jeweils eine Vielzahl von Hülsen (4) aufweisen, und eine Vielzahl von Röhrenelementen (5) aufweist, die jeweils zwischen einer Hülse (4) eines ersten der Kopfstücke (3) und einer dazugehörigen Hülse (4) des anderen Kopfstücks (3) geschaltet sind, wobei das Verfahren die Schritte aufweist:
Anordnen und Halten von mindestens einem der beiden Kopfstücke (3) und der entsprechenden Vielzahl der Röhrenelemente (5) an der erwünschten Endposition; und
Verbinden der Hülsen (4) des mindestens einen Kopfstücks (3) mit den entsprechenden Röhrenelementen (5) durch Widerstandsschweißen;
und das **dadurch gekennzeichnet ist, dass** der Schritt des Verbindens der Hülsen (4) des mindestens einen Kopfstücks (3) mit den entsprechenden Röhrenelementen (5) durch Widerstandsschweißen den Schritt aufweist:
Verbinden von Paaren von Hülsen (4) mit derselben Anzahl von Paaren von Rohrelementen (5) mittels jeweiliger Paare von Schweißnähten (14) in Reihe miteinander, wobei jedes Paar der Reihenschweißnähte (14) erhalten wird durch Erzeugen eines einzelnen elektrischen Stroms (IW) und durch Bewirken, dass er von einem Röhrenelement (5) zum anderen des entsprechenden Paars der Röhrenelemente (5) durch die beiden entsprechenden Hülsen (4) fließt.

2. Verfahren nach Anspruch 1, wobei die Paare der Reihenschweißnähte (14) gleichzeitig ausgeführt werden.

3. Verfahren nach Anspruch 1 oder 2, wobei das Widerstandsschweißen ein Buckelschweißen ist.

4. Verfahren nach einem der Ansprüche 1 bis 3, wobei das Widerstandsschweißen ein gepulstes Mittelfrequenz-Gleichstromschweißen ist.

5. Verfahren nach einem der Ansprüche 1 bis 4, wobei die Ausführung jedes Paares der Reihenschweißnähte (14) getrennt von der Ausführung jedes anderen Paares von Reihenschweißnähten (14) gesteuert wird.

6. Verfahren nach einem der Ansprüche 1 bis 5, wobei jedes der beiden Kopfstücke (3) des mindestens einen Moduls (2) eine ungerade Anzahl von Hülsen (4) aufweist und die Vielzahl der Röhrenelemente (5) dieselbe ungerade Anzahl von Röhrenelementen (5) aufweist; der Schritt des Anordnens und Haltens von mindestens einem Kopfstück (3) und der entsprechenden Vielzahl der Röhrenelemente (5) an der erwünschten Position aufweist:
Anordnen von zwei Kopfstücken (3) von mindestens zwei Modulen (2) und der beiden zwei entsprechenden Vielzahlen der Röhrenelemente (5) nebeneinander an den erwünschten Endposition entsprechend zu den beiden Kopfstücken (3);
wobei die Paare der Rohrelemente (5) ein Paar aufweisen, das aus einem Röhrenelement (5) eines ersten Moduls (2) und einem Röhrenelement (5) des anderen Moduls (2) besteht, und die Hülsenpaare (4) ein Paar aufweisen, das aus einer Hülse (4) des Kopfstücks (3) des ersten Moduls (2) und einer Hülse (4) des Kopfstücks (3) des anderen Modul (2) besteht.

7. Widerstandsschweißvorrichtung zur Ausführung des Verfahrens nach einem der Ansprüche 1 bis 6, die aufweist: Stützmittel (6, 7) zum Stützen und Halten von mindestens einem Paar Hülsen (4) von mindestens einem Kopfstück (3) und einem entsprechenden Paar Röhrenelemente (5) an der erwünschten Endposition; die Vorrichtung **dadurch gekennzeichnet ist, dass** sie weiterhin aufweist:
mindestens eine erste Kontaktbrücke (12), die dazu bestimmt ist, einen elektrischen Kontakt zwischen den Hülsen des Paars der Hülsen (4) herzustellen; mindestens ein Paar von ersten Elektroden (7), die dazu bestimmt sind, mit dem Paar der Röhrenelemente (5) in Kontakt zu kommen und vorzugsweise jeweils einen konkaven Abschnitt (10) aufweisen, der eine Krümmung aufweist, die zu der eines Seitenflächenabschnitts eines Röhrenelements (5) zur besseren Verteilung des elektrischen Kontakts komplementär ist; und Stromerzeugungsmittel (8), die dazu bestimmt sind, den elektrischen Strom (IW) zu erzeugen und elektrisch mit dem Paar der ersten Elektroden (7) verbunden sind, um das Paar der Reihenschweißnähte (14) zu erhalten.

8. Vorrichtung nach Anspruch 7, wobei die erste Kontaktbrücke (12) integral mit den Stützmitteln (6, 7) ist und vorzugsweise zwei konkave Abschnitte (13) aufweist, die jeweils eine Krümmung aufweisen, die zu der eines Seitenflächenabschnitts der Hülsen (4) zur besseren Verteilung des elektrischen Kontakts komplementär ist.

9. Vorrichtung nach Anspruch 7 oder 8, wobei das Paar der ersten Elektroden (7) mit den Stützmitteln (6, 7) integral ist und vorzugsweise ein Teil der Stützmittel (6, 7) ist, um das Paar der Röhrenelemente (5) an der erwünschten Endposition zu halten.

10. Vorrichtung nach einem der Ansprüche 7 bis 9, die für jedes Paar der ersten Elektroden (7) ein jeweiliges Paar von zweiten Elektroden (24) aufweist, das elektrisch mit dem Stromerzeugungsmittel (8) verbunden ist, beweglich ist, und dazu bestimmt ist, mit dem Paar der Röhrenelemente (5) in Kontakt zu kommen, so dass es sie gegen das Paar der ersten Elektroden (7) drückt, wobei vorzugsweise jede der zweiten Elektroden (24) einen konkaven Abschnitt (27) aufweist, der eine Krümmung aufweist, die zu der eines Seitenflächenabschnitts der Röhrenelemente (5) zur besseren Verteilung des elektrischen Kontakts komplementär ist.

11. Vorrichtung nach einem der Ansprüche 7 bis 10, wobei die Stromerzeugungsmittel (8) für jedes Paar der ersten Elektroden (7) eine jeweilige Gleichrichter-Wechselrichter-Anordnung (16) aufweisen, die durch eine Wechselstromnetzspannungsquelle (17) versorgt werden kann, um eine Wechselspannung (VI) bereitzustellen, die mit einer Mittelfrequenz (FI) oszilliert, und eine jeweilige Transformatoranordnung (18), die durch die Gleichrichter-Wechselrichter-Anordnung (16) mit Energie versorgt wird und einen Ausgang (8a-8b) aufweist, der mit dem Paar der ersten Elektroden (7) verbunden ist, um den elektrischen Strom (IW), der ein gepulster Gleichstrom ist und auf der Mittelfrequenz (FI) pulsiert, mit einer gepulsten Gleichspannung (VW) bereitzustellen, die eine kleinere Spannung als die Wechselspannung (VI) aufweist.

12. Vorrichtung nach Anspruch 10 und 11, wobei der Ausgang (8a-8b) der Transformatoranordnung (18) zum Paar der ersten Elektroden (7) und zum entsprechenden Paar der zweiten Elektroden (24) parallelgeschaltet ist.

13. Vorrichtung nach Anspruchs 10 und 11, wobei die Transformatoranordnung einen ersten und einen zweiten Schweißtransformator (18) aufweist, die beide durch die Gleichrichter-Wechselrichter-Anordnung (16) mit Energie versorgt werden, wobei der erste Schweißtransformator (18) einen Ausgang (8a-8b) aufweist, der mit dem Paar der ersten Elektroden (7) verbunden ist, und der zweite Schweißtransformator (18) einen Ausgang (8c-8d) aufweist, der mit dem Paar der zweiten Elektroden (24) verbunden ist.

14. Vorrichtung nach Anspruch 10, wobei jede erste Elektrode (7) und die jeweilige zweiten Elektrode (24) so geformt sind, dass sie miteinander in Kontakt kommen, wenn sowohl die erste als auch die zweite Elektrode (24) mit dem entsprechenden Röhrenelement (5) in Kontakt stehen.

15. Vorrichtung nach Anspruch 10, das erste Bewegungsmittel (26) aufweist, um das Paar der zweiten Elektroden (24) vor bzw. nach der Ausführung des Paars der Reihenschweißnähte (14) zum und vom Paar der Röhrenelemente (5) zu bewegen.

16. Vorrichtung nach einem der Ansprüche 7 bis 15, die für jede erste Kontaktbrücke (12) eine jeweilige zweite Kontaktbrücke (28) aufweist, die beweglich ist, um das Paar der Hülsen (4) gegen die erste Kontaktbrücke (12) zu drücken, dazu bestimmt ist, einen elektrischen Kontakt zwischen den Hülsen (4) des Paars des Hülsen (4) herzustellen, und vorzugsweise zwei konkave Abschnitte (29) aufweist, die jeweils eine Krümmung aufweisen, die zu der eines Seitenabschnitts der Hülsen (4) zur besseren Verteilung des elektrischen Kontakts komplementär ist.

17. Vorrichtung nach Anspruch 16, wobei die erste und zweite Kontaktbrücke (12, 28) so geformt sind, dass sie miteinander in Kontakt kommen, wenn sowohl die erste als auch die zweite Brücke (12, 28) mit dem entsprechenden Paar der Hülsen (4) in Kontakt stehen.

18. Vorrichtung nach einem der Ansprüche 7 bis 17, wobei die Stromerzeugungsmittel (8) eine Vielzahl von Gleichrichter-Wechselrichter-Anordnungen (16) aufweist, die jeweils mit einem entsprechenden Paar der ersten Elektroden (7) verknüpft sind, und eine Vielzahl von Transformatoranordnungen (18), die jeweils durch eine entsprechende Gleichrichter-Wechselrichter-Anordnung (16) mit Energie versorgt werden und einen Ausgang (8a-8b) aufweisen, der mit dem Paar der ersten Elektroden (7) verbunden ist; wobei die Vorrichtung (1) Steuermittel (15) aufweist, die dazu bestimmt sind, die Gleichrichter-Wechselrichter-Anordnungen (16) unabhängig voneinander zu steuern, um die Ausführung jedes Paars der Reihenschweißnähte (14) getrennt zu steuern.

## Revendications

1. Procédé pour produire un radiateur tubulaire ayant au moins un module (2) comprenant deux pièces de tête (3), chacune comprenant une pluralité de manchons (4), et une pluralité d'éléments tubulaires (5), chacun raccordé avec un manchon (4) d'une première desdites pièces de tête (3) et un manchon (4) correspondant de l'autre pièce de tête (3), le procédé comprenant les étapes suivantes :
placer et maintenir au moins l'une des deux pièces de tête (3) et la pluralité relative d'éléments tubulaires (5) dans la position finale désirée ; et
assembler les manchons (4) de ladite au moins une pièce de tête (3) aux éléments tubulaires (5) relatifs par soudage par résistance ;
et étant **caractérisé en ce que** l'étape pour assembler les manchons (4) de ladite au moins une pièce de tête (3) aux éléments tubulaires (5) relatifs par soudage par résistance comprend l'étape suivante :
assembler des paires de manchons (4) au même nombre de paires d'éléments tubulaires (5) au moyen de paires respectives de soudures (14) en série entre elles, chaque paire de soudures (14) en série étant obtenue en générant un simple courant électrique (IW) et en l'amenant à circuler d'un élément tubulaire (5) à l'autre de la paire relative d'éléments tubulaires (5) par les deux manchons (4) relatifs.

2. Procédé selon la revendication 1, dans lequel lesdites paires de soudures (14) en série sont réalisées simultanément.

3. Procédé selon la revendication 1 ou 2, dans lequel ledit soudage par résistance est un soudage par bossages.

4. Procédé selon l'une quelconque des revendications 1 à 3, dans lequel ledit soudage par résistance est un soudage à courant continu pulsé à moyenne fréquence.

5. Procédé selon l'une quelconque des revendications 1 à 4, dans lequel l'exécution de chaque paire de soudures (14) en série est commandée séparément de l'exécution de n'importe quelle autre paire de soudures (14) en série.

6. Procédé selon l'une quelconque des revendications 1 à 5, dans lequel chacune des deux pièces de tête (3) dudit au moins un module (2) comprend un nombre impair de manchons (4) et ladite pluralité d'éléments tubulaires (5) comprend le même nombre impair d'éléments tubulaires (5) ; l'étape pour placer et maintenir au moins une pièce de tête (3) et la pluralité relative des éléments tubulaires (5) dans la position souhaitée comprenant l'étape suivante :
placer l'une à côté de l'autre deux pièces de tête (3) d'au moins deux modules (2) et les deux pluralités relatives d'éléments tubulaires (5) dans les positions finales souhaitées par rapport aux deux pièces de tête (3) ;
lesdites paires d'éléments tubulaires (5) comprenant une paire se composant d'un élément tubulaire (5) d'un premier module (2) et d'un élément tubulaire (5) de l'autre module (2) et lesdites paires de manchons (4) comprenant une paire se composant d'un manchon (4) de la pièce de tête (3) du premier module (2) et d'un manchon (4) de la pièce de tête (3) de l'autre module (2) .

7. Appareil de soudage par résistance pour mettre en œuvre le procédé selon l'une quelconque des revendications 1 à 6, comprenant : des moyens de support (6, 7) pour supporter et maintenir au moins une paire de manchons (4) d'au moins une pièce de tête (3) et une paire respective d'éléments tubulaires (5) dans la position finale souhaitée ; l'appareil étant **caractérisé en ce qu'**il comprend en outre : au moins un premier pont de contact (12) qui est conçu pour établir un contact électrique entre les manchons de ladite paire de manchons (4) ; au moins une paire de premières électrodes (7) qui sont conçues pour venir en contact avec ladite paire d'éléments tubulaires (5) et comprennent chacune de préférence une partie concave (10) ayant une courbure qui est complémentaire de celle d'une partie de surface latérale d'un élément tubulaire (5) pour une meilleure distribution du contact électrique ; et des moyens de génération de courant (8) qui sont conçus pour générer ledit courant électrique (IW) et sont électriquement raccordés à la paire de premières électrodes (7) afin d'obtenir ladite paire de soudures (14) en série.

8. Appareil selon la revendication 7, dans lequel ledit premier pont de contact (12) est solidaire avec lesdits moyens de support (6, 7) et comprend de préférence deux parties concaves (13), ayant chacune une courbure qui est complémentaire de celle d'une partie de surface latérale des manchons (4) pour une meilleure distribution du contact électrique.

9. Appareil selon la revendication 7 ou 8, dans lequel ladite paire de premières électrodes (7) est solidaire avec lesdits moyens de support (6, 7) et fait de préférence partie desdits moyens de support (6, 7) afin de maintenir ladite paire d'éléments tubulaires (5) dans la position finale souhaitée.

10. Appareil selon l'une quelconque des revendications 7 à 9, comprenant, pour chaque paire de premières électrodes (7), une paire respective de secondes électrodes (24), qui est électriquement raccordée auxdits moyens de génération de courant (8), est mobile et est conçue pour venir en contact avec ladite paire d'éléments tubulaires (5), les comprimant ainsi contre la paire de premières électrodes (7), de préférence chacune des secondes électrodes (24) comprenant une partie concave (27) qui a une courbure qui est complémentaire de celle d'une partie de surface latérale des éléments tubulaires (5) pour une meilleure distribution du contact électrique.

11. Appareil selon l'une quelconque des revendications 7 à 10, dans lequel lesdits moyens de génération de courant (8) comprennent, pour chaque paire de premières électrodes (7), un ensemble de redresseur - inverseur (16) respectif, qui peut être alimenté par une source de tension de réseau de courant alternatif (17) afin de fournir une tension alternative (VI) oscillant à une moyenne fréquence (FI), et un ensemble de transformateur (18) respectif qui est alimenté par l'ensemble de redresseur - inverseur (16) et a une sortie (8a-8b) raccordée à la paire de premières électrodes (7) afin de fournir ledit courant électrique (IW), qui est un courant continu pulsé et pulse à la moyenne fréquence (FI), avec une tension continue pulsée (VW) qui a une plus petite tension que ladite tension alternative (VI).

12. Appareil selon les revendications 10 et 11, dans lequel ladite sortie (8a-8b) dudit ensemble de transformateur (18) est raccordée en parallèle à la paire de premières électrodes (7) et à la paire respective de secondes électrodes (24).

13. Appareil selon les revendications 10 et 11, dans lequel ledit ensemble de transformateur comprend un premier et un second transformateur de soudage (18), qui sont tous deux alimentés par ledit ensemble de redresseur - inverseur (16), le premier transformateur de soudage (18) ayant une sortie (8a-8b) qui est raccordée à la paire de premières électrodes (7), et le second transformateur de soudage (18) ayant une sortie (8c-8d) qui est raccordée à la paire de secondes électrodes (24).

14. Appareil selon la revendication 10, dans lequel chaque première électrode (7) et la seconde électrode (24) respective sont formées afin de venir mutuellement en contact lorsqu'à la fois la première et la seconde électrode (24) sont en contact avec l'élément tubulaire (5) relatif.

15. Appareil selon la revendication 10 et comprenant des premiers moyens de déplacement (26) pour déplacer ladite paire de secondes électrodes (24) vers et depuis ladite paire d'éléments tubulaires (5) avant et après l'exécution de ladite paire de soudures (14) en série, respectivement.

16. Appareil selon l'une quelconque des revendications 7 à 15 et comprenant, pour chaque premier pont de contact (12), un second pont de contact (28) respectif, qui est mobile afin de comprimer ladite paire de manchons (4) contre le premier pont de contact (12), est conçu pour établir un contact électrique entre les manchons (4) de ladite paire de manchons (4) et comprend de préférence deux parties concaves (29), chacune ayant une courbure qui est complémentaire de celle d'une partie latérale des manchons (4) pour une meilleure distribution du contact électrique.

17. Appareil selon la revendication 16, dans lequel lesdits premier et second ponts de contact (12, 28) sont formés afin de venir mutuellement en contact lorsqu'à la fois le premier et le second pont (12, 28) sont en contact avec ladite paire relative de manchons (4).

18. Appareil selon l'une quelconque des revendications 7 à 17, dans lequel lesdits moyens de génération de courant (8) comprennent une pluralité d'ensembles de redresseur - inverseur (16), chacun associé avec une paire respective de premières électrodes (7), et une pluralité d'ensembles de transformateur (18), chacun alimenté par un ensemble de redresseur - inverseur (16) respectif et ayant une sortie (8a-8b) qui est raccordée à la paire de premières électrodes (7) ; l'appareil (1) comprenant des moyens de commande (15) qui sont conçus pour commander lesdits ensembles de redresseur - inverseur (16) indépendamment l'un de l'autre afin de commander séparément l'exécution de chaque paire de soudures (14) en série.
